# EUROPEAN PATENT APPLICATION

(11) **EP 4 703 633 A1**
(43) Date of publication of application: **04.03.2026**
(21) Application number: 25197662.7
(22) Date of filing: 22.08.2025
(51) Int. Cl.: F21V 5/00, A01G 9/24, F21Y 103/10, F21Y 105/12, F21Y 115/10

(54) **A LIGHT MODULE FOR A LED GROW LIGHT**

(30) Priority: 26.08.2024 US 202418814688
(71) Applicant: GNUK Ltd, Durham, Tyne and Wear DL3 7EH (GB)
(72) Inventor: EDWARDS, Daniel John, Durham, DH1 3BL (GB)
(74) Representative: Definition IP Limited

(57) **Abstract**

A light module 1 for use in a LED grow light 201 comprising a linear optic array 5 with a plurality of linear optics 3. The plurality of linear optics 3 comprises at least one first linear optic 3a and at least one second linear optic 3b. Each linear optic 3 has a wall 13 which defines at least in part a LED housing void 19 located within which is a plurality of LEDs 9. The wall 13 has a light shaping portion 18 that is located adjacent to the plurality of LEDs 9. The at least one first linear optic 3a has a first longitudinal axis X-X and the at least one second linear optic 3b has a second longitudinal axis Y-Y, wherein the first longitudinal axis X-X and the second longitudinal axis Y-Y are offset from each other by an angular offset of α degrees.

## Description

The present invention relates to a light module for use in a high-powered compact light emitting diode (LED) grow light which is suitable for top lighting in horticultural applications.

LEDs emit light that has a Lambertian distribution of light. The intensity of light is greatest directly in front of the LED, i.e. at the centreline or 0° position, and the intensity of light reduces as the angle from the centreline increases. A LED array providing a Lambertian distribution of light is not desirable for applications such as horticulture, because the high intensity of light at the 0° position creates 'hot spots' which can result in damage to the plants located directly underneath the LEDs, i.e. those in line with the 0° position. In addition, the light intensity reduces quickly with distance away from the 0° position. The light intensity at an angle of 45° might be approximately half that at the 0° position. In order to avoid damage from hot spots and in order to provide an intensity of light that is of an acceptable uniformity the LED arrays have to be placed many metres above the plant canopy and in a perfect grid formation (the 'grid method'), or the LED arrays have to be placed in multiple rows of fixtures spaced end to end fully and spanning the length or width of the full plant canopy (the 'row method'). There are significant disadvantages to both of these methods. The grid method only works in greenhouses that are four metres or more above the canopy. The irradiance uniformity of the minimum to maximum flux density (min/max) is always particularly low at around 0.70 and there's a large loss of light outside of the targeted growing space. The row method is more effective at achieving a better irradiance uniformity, for example 0.8 min/max, at a reduced height of the LED arrays above the plant canopy, but the row method has large upfront fixture and installation costs and suffers from edge drop off, where the coverage is particularly poor at the edge of the targeted growing space. The row method also has a limited working height, meaning that the LED arrays need to be regularly adjusted to stay in the target distance away from the plant canopy.

LED grow lights use refractive optical elements, optics, to distribute light from LEDs in order to achieve a desired batwing optical distribution. The choice of LEDs that can be used in existing LED grow lights of the prior art is limited by the nature of the optics with which they are to be used. The optics currently in use do not permit optimisation of the quantity of the LEDs, nor the density of light emitted from them and do not enable all of the potentially advantageous types of LEDs to be used.

The present invention is a grow light which utilises lighting modules which have improved optics, specifically linear optics.

The grow light of the present invention is also suited to being used to provide a grid of grow lights, or a row of grow lights, such that the plant canopy can be provided with light having a high uniformity of Photosynthetic Photon Flux Density (PPFD) and so that a high percentage of light can be transmitted to the light canopy.

According to a first aspect of the present invention there is provided a light module for use in a LED grow light comprising a linear optic array with a plurality of linear optics, the plurality of linear optics comprising at least one first linear optic and at least one second linear optic, each linear optic having a wall which defines at least in part a LED housing void, wherein a plurality of LEDs are located within a LED housing void of a linear optic, the wall having a light shaping portion that has a cross-sectional profile and that is located adjacent to the plurality of LEDs, and wherein the at least one first linear optic has a first longitudinal axis and the at least one second linear optic has a second longitudinal axis, wherein the first longitudinal axis and the second longitudinal axis are offset from each other by an angular offset of α degrees.

The use of linear optics is beneficial because they facilitate an arrangement of LEDs of different wavelengths that can be very closely spaced in a single line under a single optic. This provides significantly higher power LED density design options and the versatility to blend different types of LEDs, for example LEDs with a phosphor coating and monochromatic wavelength LEDs, from various manufacturers. These advantages cannot be provided by arranging multiple LEDs under a single large non-linear optic because when using such a non-linear optic the LEDs would have to be a single type of LED in order to achieve the desired distribution for those wavelengths. If LEDs of different wavelengths were provided under one non-linear optic it would result in some wavelengths having different distributions based on the positioning of the LEDs underneath the non-linear optic. The present invention can also produce better colour mixing as the LEDs are closely spaced under the same optic lens and the same linear optic can be used for a wide range of light emitting surface area (LES) sizes whilst achieving the same light distribution. In addition, as the LES size increases in a non-linear optic the wall thickness of the optic required to achieve the desired angle of refraction also increases. The optic very quickly becomes too thick to be moulded from optical thermoplastics. The prior art includes silicone and glass optics that are used for larger single package LEDs, but they are mechanically complex to integrate, they have high material and processing costs, and they are only useful for one type of LED per optic.

Preferably, the linear optic array comprises a first linear optic block comprising a plurality of linear optics including the at least one first linear optic and a second linear optic block comprising a plurality of linear optics including the at least one second linear optic. It is advantageous to arrange the linear optics into linear optic blocks because this enables the linear optics to be arranged into differently shaped arrays, for example triangular arrays or octagonal arrays, whilst at the same time providing a light module that minimises the amount of space between the LEDs and that can have a square or rectangular shape. In addition, the linear optic blocks facilitate an improved electrical design by breaking up the LED array into series and parallel blocks with spacing provided between them for locating wiring. In relation to LED arrays in parallel, they need the same LED components to balance the electrical current. Rotated cells also need the same LED components because there are not rotated counterparts, which is another electrical and mechanical constraint. Breaking large linear optics down into linear optic blocks makes the most practical sense for parallel LED and rotated LED constraints. Screws also need to be positioned under the linear optic array to thermally connect the Metal Core Printed Circuit Board (MCPCB) to the heat sink. The spaces in-between linear optic blocks provide voids suitable for placement of these screws in a functionally and aesthetically desirable manner.

However, the present invention encompasses arrangement of linear optics into a single optical block which forms the linear optic array, that block might be, for example, triangular or octagonal.

Preferably, all of the linear optics in the first linear optic block are aligned parallel to each other and spaced apart from each other and wherein all of the linear optics in the second linear optic block are aligned parallel to each other and spaced apart from each other, and wherein the longitudinal axis of each of the linear optics in the first linear optic block and the longitudinal axis of each of the linear optics in the second linear optic block are angularly offset from each other by the angular offset of α degrees, so that they are perpendicular. This arrangement is particularly efficient in terms of minimising the space between LEDs and thus increasing the density of LEDs for optimising the efficiency and/or quantity of light produced by the light module.

In a variant, preferably each of the linear optics in the first linear optic block is parallel to at least one of the linear optics in the second linear optic block, such as is the case if the linear optics are arranged in, for example, a triangular linear optic block.

Preferably, the first linear optic block is located adjacent to the second linear optic block. This arrangement minimises the space between LEDs and thus increases the density of LEDs for optimising the efficiency and/or quantity of light produced by the light module.

Preferably, the light module comprises a plurality of first linear optic blocks and a plurality of second linear optic blocks which together form a generally rectangular linear optic array. A rectangular, or square, linear optic array is advantageous because the light module can then be rectangular or square and can be readily accommodated in a generally rectangular LED grow light.

Preferably, the cross-sectional profile of the light shaping portion is longitudinally aligned with a longitudinal axis of the linear optic, wherein the cross-sectional profile is constant along substantially all of its length. This facilitates the arrangement of LEDs and linear optics in a manner that will produce a symmetrical light distribution from the light module. The cross-sectional profile of the light shaping portion can be constant along all of its length, or along substantially all of its length. It may be the case that small sections of the linear optics have a different cross-sectional profile which will not prevent the light module from producing a desired distribution of light. For example, in arrangements where perpendicular linear optics are joined at a corner, the cross-sectional profile of the corner could be different. Also, non-uniform surface finishes or coatings might be applied to the external and/or internal surfaces of the linear optics, without prejudicing the ability for a desired light distribution to be obtained from the optics.

Preferably, the cross-sectional profile of the light shaping portion is constant along substantially all of its length and is symmetrical about a plane that is aligned with a longitudinal axis of the linear optic. This also facilitates the arrangement of LEDs and linear optics in a manner that will produce a symmetrical light distribution from the light module.

Preferably, the light module comprises a plurality of first linear optic blocks and a plurality of second linear optic blocks, each of the first and second linear optic blocks comprising five linear optics, wherein the ends of the linear optics within each linear optic block are aligned with each other. This arrangement is particularly efficient in terms of minimising the space between LEDs and thus increasing the density of LEDs for optimising the efficiency and/or quantity of light produced by the light module.

Preferably, the linear optic array comprises sixteen linear optic blocks arranged in a four-by-four matrix of eight first optic blocks and eight second optic blocks, with the linear optics in adjacent optic blocks angularly offset from each other by the angular offset of α degrees, such that they are perpendicular.

Preferably, the form of the cross-sectional profile of the light shaping portion is identical for all of the linear optics and wherein the size of the cross-sectional profile of the light shaping portion of one linear optic can be different to the size of the cross-sectional profile of the light shaping portion of the at least one other of the linear optics. It is advantageous to be able to scale up or scale down the cross-sectional profile of the linear optics in order to accommodate differently sized LEDs.

Preferably, all of the linear optics have a light shaping portion that is identical in form and size. This is advantageous because it typically creates a more desirable distribution symmetry across the C-planes and a more desirable beam angle.

Preferably, the plurality of LEDs are located on a LED circuit board in a plurality of LED lines, each LED line comprising a plurality of LEDs, wherein the LED circuit board is attached to the linear optic array and wherein a linear optic array is located over each LED line, such that the plurality of LEDs in each LED line are located within the LED housing void of a linear optic. The arrangement of the linear optic array and the LED circuit board facilitates the use of the same linear optic array with different LED circuit boards. The LED circuit board can be provided with different numbers of LEDs associated with each linear optic, i.e. housed within the LED housing void, without having to change the form of the linear optic array.

Preferably, at least one of the LEDs in a LED line is centrally placed on a longitudinal axis of the linear optic within which it is located.

Preferably, at least one of the LEDs in a LED line is centrally placed on a longitudinal axis of a linear optic and at least one of the LEDs in a LED line is offset from the longitudinal axis of the linear optic. The ability to offset LEDs is advantageous for producing different distributions of light from a light module whilst using the same linear optic array.

Preferably, a first type of LED and a second type of LED are located within the LED housing void of a linear optic.

Preferably, the first type of LED located within the LED housing void of a linear optic has a larger light emitting surface area than the second type of LED located within the LED housing void.

Preferably, the light shaping portion of the linear optics has a first section which does not change the angle of light emitted by the LEDs, a second section in which the angle of light is changed by the external surface only of the linear optic and a third section in which the angle of light is changed by the internal surface and the external surface of the linear optic.

Preferably, the light shaping portion of the linear optics has a first section, a second section and a third section, wherein the first section does not change the angle of the light passing through it relative to a plane that is perpendicular to a flat bottom surface of the linear optic array and located on the longitudinal axis of the linear optics, the second section increases the angle of light passing through it, thus directing that light away from the plane, and the third section decreases the angle of light passing through it, thus directing that light towards the plane.

The light shaping portion of the present invention achieves the desired distribution of light whilst optimising the wall thickness of the linear optics which allows for closer spacing of the linear optics. The light shaping portion is also suitable for manufacture using typical injection moulding processes, for example by having appropriate draft angles.

According to a second aspect of the present invention there is provided a LED grow light comprising a light module.
Figure 1 is a perspective view of a grow light having two light modules;
Figure 2 is a perspective exploded view of a light module of Figure 1;
Figure 3 is a close-up view of the external surface a linear optic array of the light module of Figure 1 showing blocks of linear optics within the linear optic array;
Figure 4 is a close-up view of the internal surface of the linear optic array of Figure 3 showing the underside of the linear optics;
Figure 5 is a close-up view of a LED circuit board of the light module of Figure 1, with a row of LEDs removed to show the LED mounts;
Figure 6 is a schematic view showing the LEDs in a first arrangement of two adjacent LED blocks;
Figure 7 is a schematic view showing the LEDs in a second arrangement of two adjacent LED blocks;
Figure 8 is a schematic view showing the LEDs in a third arrangement of two adjacent LED blocks;
Figure 9 is a perspective cross-sectional view through linear optics in two adjacent optic blocks of the linear optic array of the light module of Figure 1;
Figure 10 shows the cross-sectional profile of the linear optics of the light module of Figure 1;
Figure 11 is a cross-sectional elevation through the light module of Figure 1, showing one linear optic in a close-up view;
Figure 12 is a cross-sectional profile of a linear optic of the light module of Figure 1;
Figure 13 is a plot showing a Lambertian light intensity distribution for a LED;
Figure 14 shows the light intensity distribution from a single 3030 white mid power LED with a LES of 3mm² placed under a linear optic in the linear optic array of the light module of Figure 1;
Figure 15 shows the light intensity distribution from a single 3030 white mid power LED with a LES of 3mm² placed under a first linear optic and a single 3030 white mid power LED with a LES of 3mm² placed under a second linear optic in the linear optic array of the light module of Figure 1, where the first and second linear optics are orientated so that their respective longitudinal axes X-X, Y-Y are perpendicular to each other;
Figure 16 shows the light intensity distribution from the light module of Figure 1 having eight hundred 3030 white mid power LEDs with an LES of 3mm² and eighty 3535 660nm LEDs with a LES of 2mm² and a reflective coating laid over the printed circuit board;
Figure 17 illustrates two identically sized optic blocks that can form the linear optic array of a light module, or part of the linear optic array of a light module;
Figure 18 illustrates three optic blocks that can form the linear optic array of a light module, or part of the linear optic array of a light module;
Figure 19 illustrates a linear optic block that can form the linear optic array of a light module, or part of the linear optic array of a light module;
Figure 20 illustrates a linear optic block that can form the linear optic array of a light module, or part of the linear optic array of a light module; and
Figure 21 illustrates a light module 1 having a linear optic array 705 comprising linear optics 703 arranged into triangular linear optic blocks 721.

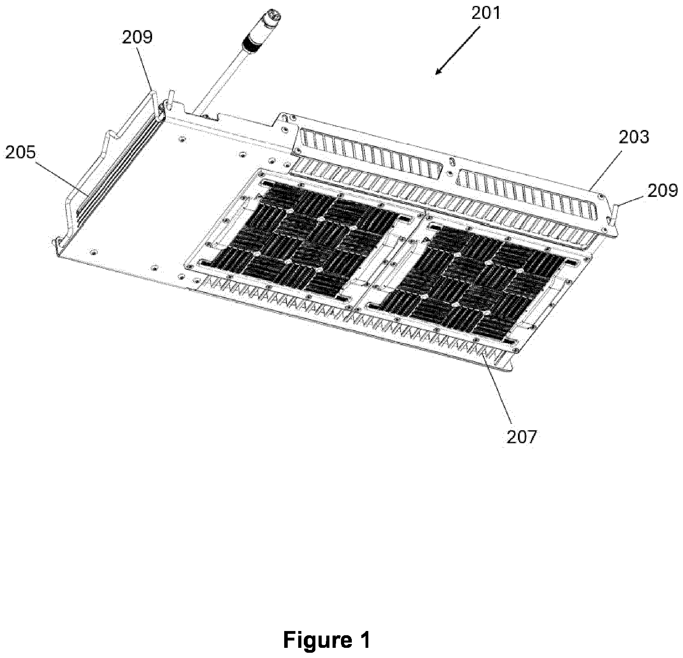

A LED grow light 201 having two identical light modules 1 is illustrated in Figure 1. It comprises a chassis 203 on to which is attached an electrical power supply and controller 205 and a heat sink 207. The two light modules 1 are attached to the heat sink 207. A hanging bracket 209 is attached to either end of the frame 203 to facilitate suspension of the grow light 201.

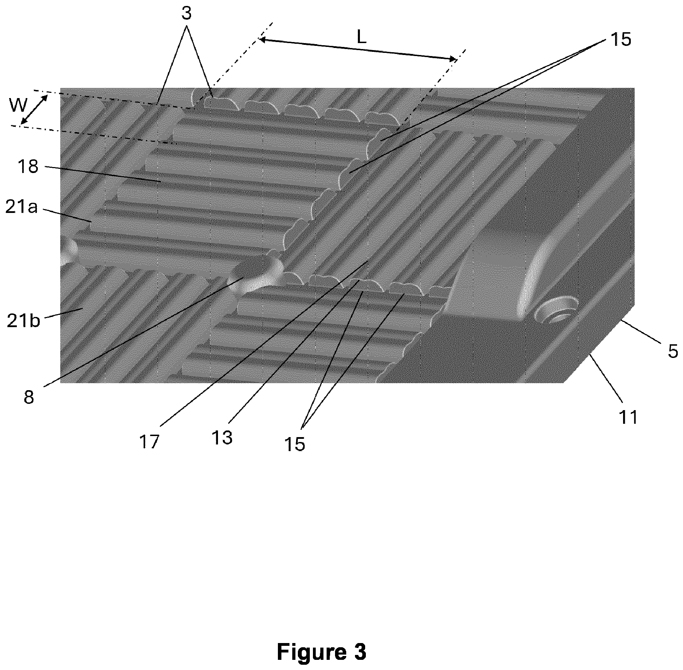

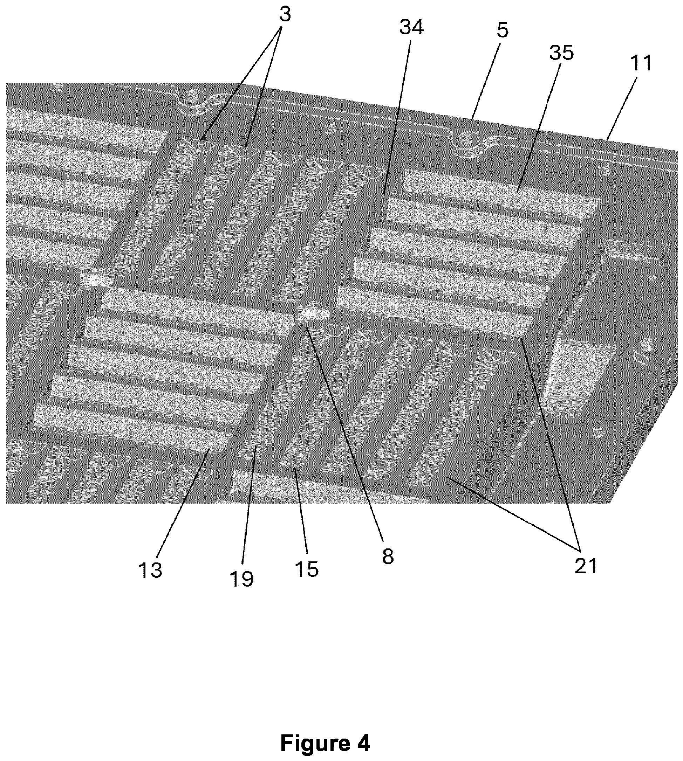

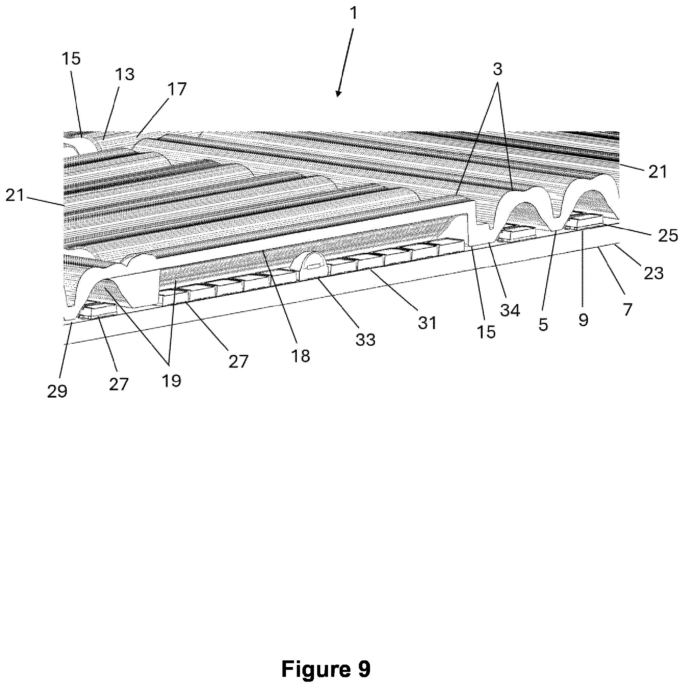

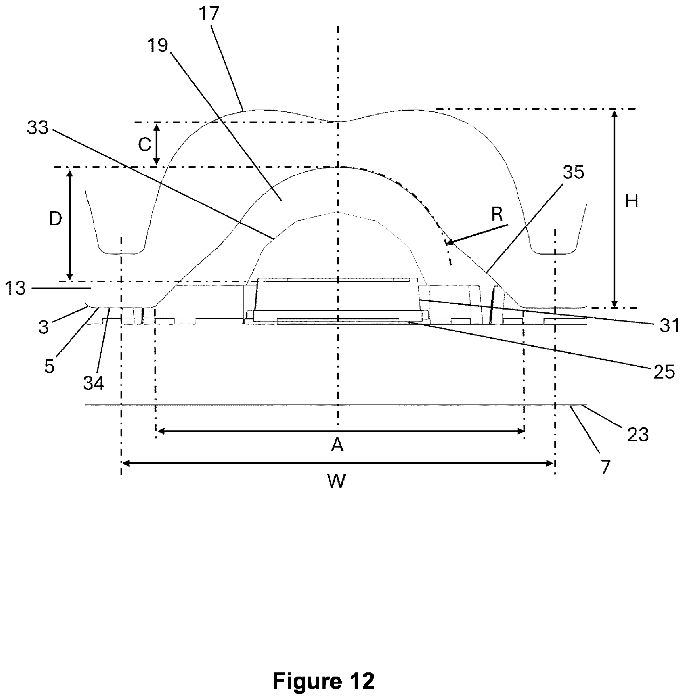

The light module 1 comprises an arrangement of a number of identical transparent and refractive linear optics 3 integrated into a one-piece linear optic array 5 which is fitted on top of and covers a LED circuit board 7 (a Metal Core Printed Circuit Board (MCPCB)) to which LEDs 9 are fixed in a LED array 10. Each LED 9 is located on the LED circuit board 7 so that it is positioned within a linear optic 3 when the linear optic array 5 and the LED circuit board 7 are attached together. The LED circuit board 7 is provided with a light reflective layer 12, provided by a coating applied to the LED circuit board 7, or by a light reflective sheet with LED cut-outs laid over the LED circuit board 7. The linear optic array 5 and the LED circuit board 7 are independently attached to the heat sink 207. A sheet of Thermal Interface Material (TIM - not shown) is located between the heat sink 207 and the LED circuit board 7. There is a gap maintained between the bottom surface of the linear optic array 5 and the top surface of the LED circuit board 7, as shown for example in Figure 9 and in Figure 12. The linear optic array 5 and the LED circuit board 7 are aligned by locating location pins (not shown) that pass through the LED circuit board 7 into pin locators 8, for example as shown in Figures 3 and 4.

The linear optic array 5 is a generally rectangular one-piece injection moulding (and so has appropriate moulding features, such as sufficient draft angles) and comprises a raised external frame 11 surrounding a recess within which are located eighty linear optics 3. A gasket 14 (not shown) is located between the underside of the frame 11 of the linear optic array 5 and the heat sink 207 and a plurality of bolts 211 are used to clamp the linear optic array 5 to the heat sink 207, thereby creating a waterproof seal around the outside of the linear optic array 5 that is compliant with IP66 requirements, thus preventing ingress of water to the inside surfaces of the linear optic array 5. The linear optic array is made from polymethyl methacrylate (PMMA), for example Plexiglas^{®} 8N, or from polycarbonate, or from glass. The linear optic array could also be made from silicone, which would require a skeletal support frame to give it mechanical strength.

The linear optics 3 are elongate with a length L that is greater than their width W and have a wall 13, which comprises an end closure 15 at each of its ends. The wall 13 defines an internal LED housing void 19, as shown in Figure 4. The linear optics 3 have a shaped upper surface 17. The wall 13 has a cross-sectional profile that is constant along a centrally located light shaping portion 18 of the linear optic 3, the light shaping portion 18 being the part of the linear optic 3 that is located directly above the LEDs 9 of a LED line 27 that is located within the linear optic 3. The end closures 15 are perpendicular to the longitudinal axis of the linear optic 3.

The linear optics 3 are arranged in optic blocks 21 each containing five linear optics 3, for example as shown in the close-up view of Figure 3. The linear optics 3 in each optic block 21 are arranged parallel to each other, are regularly spaced from each other and have their end closures 15 aligned. The linear optics 3 are spaced apart from each other by spacing strips 22 which form part of the wall 13. The optimal spacing of the linear optics 3 is a compromised position that maximises the number of linear optics 3 that can be placed within the linear optic array 5, whilst minimising the amount of light transmitted from one linear optic 3 into an adjacent linear optic 3. This arrangement of optic blocks 21 optimises the density of LEDs 9 and the light transmission efficiency of the linear optic array 5. The linear optic array 5 comprises sixteen optic blocks 21 arranged, equally spaced, in four rows and four columns. The optic blocks 21 are aligned within the linear optic array 5 so that their linear optics 3 are orientated to run left to right, or are orientated to run top to bottom. First linear optics 3a run right to left and a second linear optics 3b runs top to bottom. The first linear optics 3a and the second linear optics 3b are aligned relative to each other at an angle α of ninety degrees, i.e. in a perpendicular direction Each optic block 21 in the linear optic array 5 has its linear optics 3 running in a direction that is perpendicular to the direction in which the linear optics 3 of an adjacent optic block 21 are running. A first optic block 21a has linear optics 3a running left to right and a second optic block 21b has linear optics 3b running top to bottom.

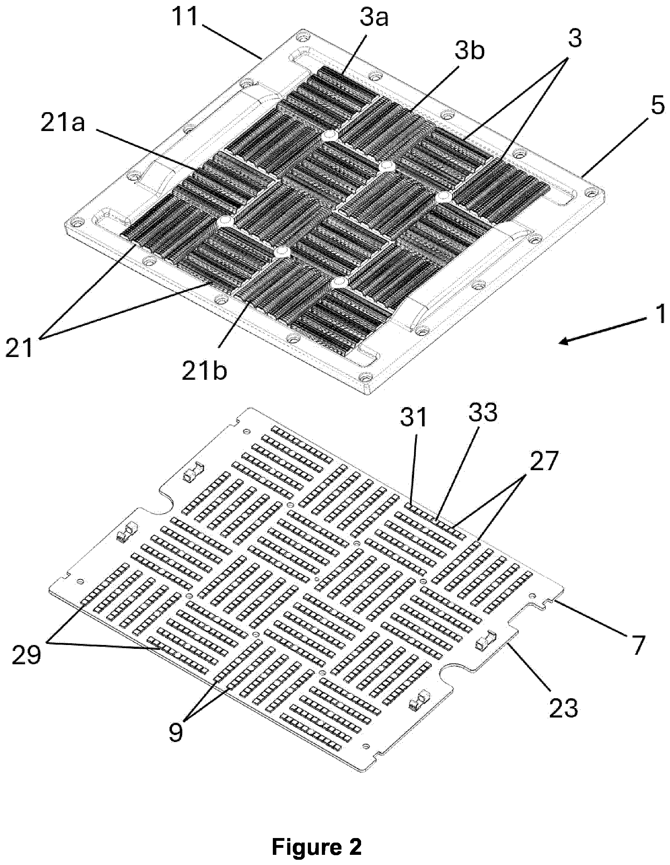

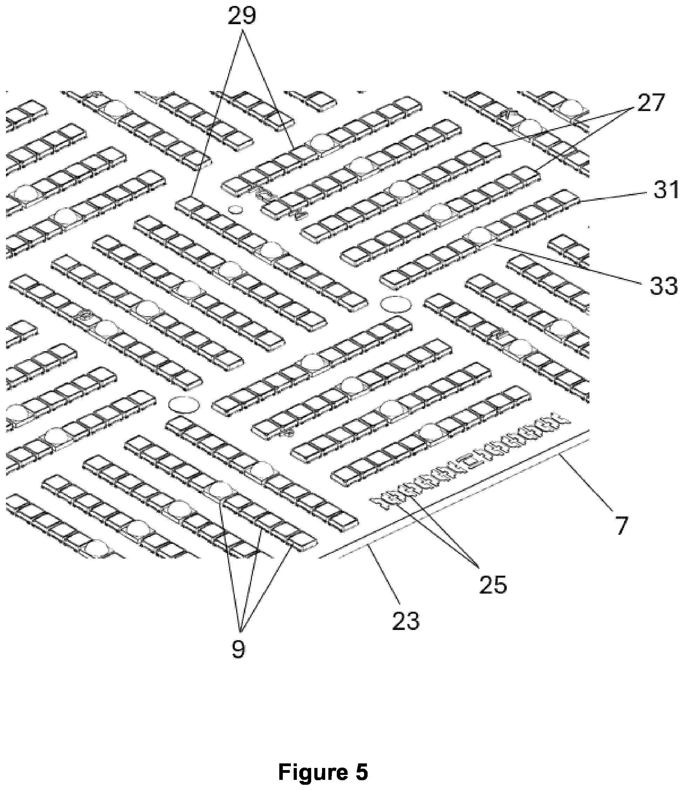

The LED circuit board 7 comprises a copper substrate 23 to which LED mounts 25 in the form of solder pads are attached for the mounting of LEDs 9, as shown in Figure 2. Figure 5 is a close-up view of the LED circuit board 7 in which a row of the LEDs 9 has been removed in order to show the LED mounts 25.

The LEDs 9 are arranged on the LED circuit board 9 in LED lines 27, with eleven LEDs 9 in each line that are regularly spaced from each other. The LEDs 9 are spaced at the closest distance to each other that is possible, bearing in mind the manufacturing constraints for the LED circuit board 7, in order to be able to create a high-density LED array 10. If a low-density LED array 10 is required, then the LEDs 9 are spaced equidistantly from each other in order to provide a more distributed thermal load. The LED lines 27 are arranged in the same configuration as the linear optics 3 of the linear optic array 5. Five LED lines 27 are arranged parallel to each other and regularly spaced from each other to form a LED block 29. The LED array 10 comprises sixteen LED blocks 29 arranged, equally spaced, in four rows and four columns. There are thus eight hundred and eight LEDs 9 within the LED array 10. A first LED block 29a is aligned within the linear LED array 10 so that its LED lines 27 are orientated to run left to right. A second LED block 29b is aligned within the linear LED array 10 so that its LED lines 27 are orientated to run top to bottom, i.e. in a direction perpendicular to the left to right direction. Each LED block 29 in the LED array 10 has its LED lines 27 running in a direction that is perpendicular to the direction in which the LED lines 27 of an adjacent LED block 29 are running.

The LED array 10 comprises two types of LEDs 9, white LEDs 31 and red LEDs 33. The LED lines 27 comprise a red LED 33 located at the centre of the LED line 27, with five white LEDs 31 located to one side and another five white LEDs 3 located to the other side. The LED array 10 therefore comprises eight hundred white LEDs 31 and eighty red LEDs 33.

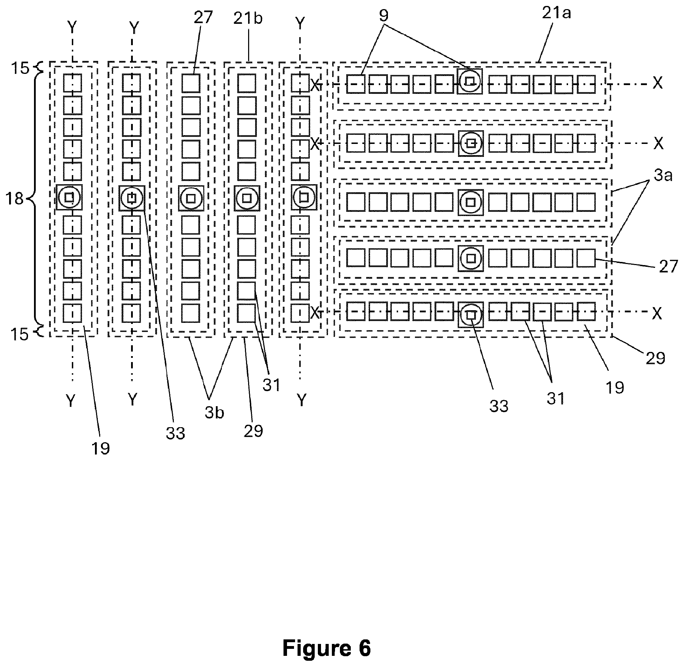

Figure 6 is a schematic view showing the alignment of the LEDs 9 within the LED lines 27 of a first linear optic block 21a and a second linear optic block 21b. The LEDs 9 are equally spaced with a 0.2mm spacing between adjacent white LEDs 31. The spacing from the end white LED 31 to the end closure 15 is 0.5mm. This spacing is larger in order to reduce the amount of light that spills out of the linear optics 3 through the end closures 15 and maximise the amount of light that passes through the light shaping portion 18. In Figure 6 it can be seen that some of the red LEDs 33 are offset from a longitudinal axis and all of the white LEDs 31 are aligned centrally with a longitudinal axis. Figure 2 shows a different arrangement in which all of the red LEDs 33 and all of the white LEDs 31 are aligned centrally with a longitudinal axis. In Figure 2, axes X-X are the left to right axes for one LED block 29 and axes Y-Y are the top to bottom axes for an adjacent LED block 29. In the left-hand LED block 29 the left-hand LED line 27 has its red LED 33 offset to the left relative to an axis Y-Y and the right-hand LED line 27 has its red LED 33 offset to the right relative to an axis Y-Y. The three LED lines 27 between the left-hand and right-hand LED lines 27 are aligned centrally with an axis Y-Y.

In the right-hand LED block 29 the top LED line 27 has its red LED 33 offset to the top relative to an axis X-X and the bottom LED line 27 has its red LED 33 offset to the bottom relative to an axis X-X. The three LED lines 27 between the top and bottom LED lines 27 are aligned centrally with an axis X-X.

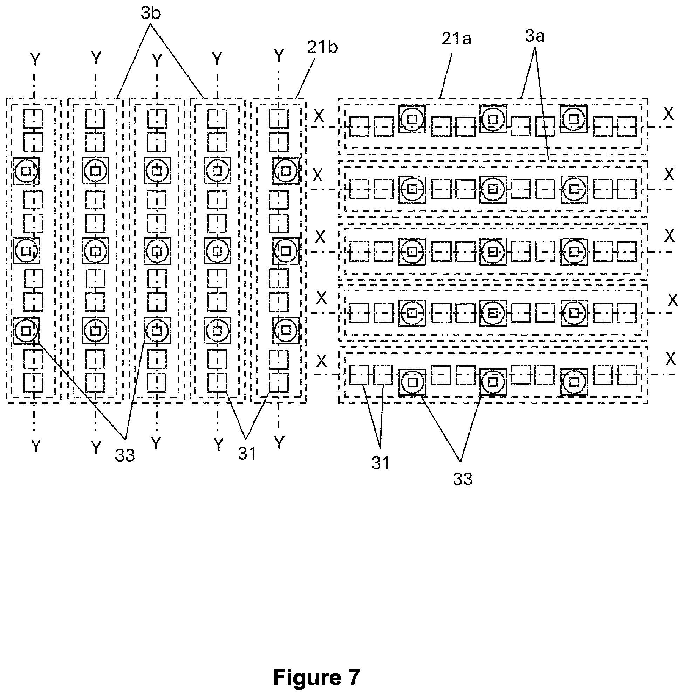

Figure 7 shows a variant of the present invention in which there are three red LEDs 33 in each LED line 27 and eight white LEDs 31. The left-hand, right-hand, top and bottom LED lines 27 each have their three red LEDs 33 offset from the longitudinal axes X-X, Y-Y.

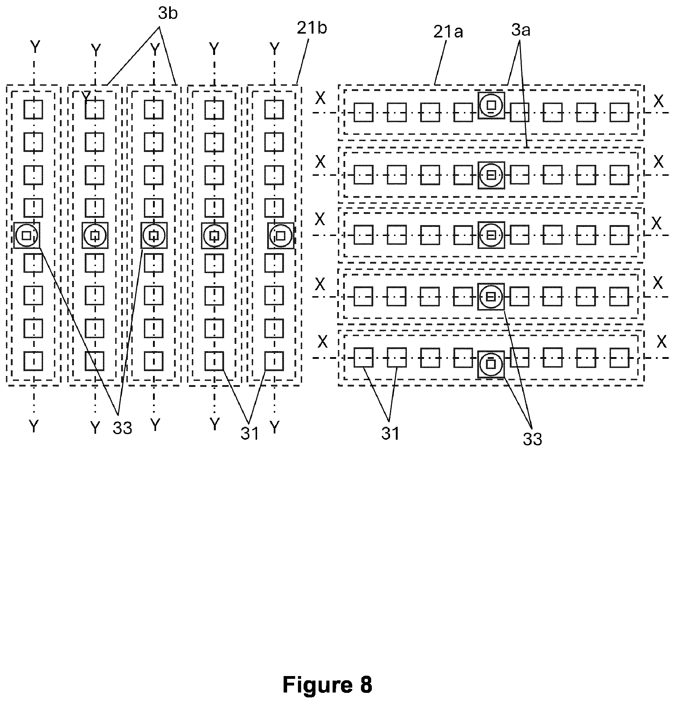

Figure 8 shows a variant of the present invention in which the LED lines 27 contain one red LED 33 and eight white LEDs 31. The left-hand, right-hand, top and bottom LED lines 27 each have their red LED 33 offset from the longitudinal axes X-X, Y-Y.

Figure 9 shows the linear optics 3 in dashed lines with the LED lines 27 located centrally within the LED housing void 19 of each linear optic 3. The linear optics 3 are dimensioned so that the LEDs 9 in each LED line 27 can be accommodated within the LED housing void 19 and so that the red LEDs 33 can be offset from the longitudinal axes X-X and Y-Y.

The red LEDs 33 have a smaller light emitting surface area than the white LEDs 31, as is shown in Figure 6. The red LEDs 33 are offset from the longitudinal axes X-X and Y-Y because this creates a light distribution for the red LEDs 33 that is similar to that produced for a LED with a larger light emitting surface.

Figure 9 is a cross-sectional view of the light module 1 showing the position of the LEDs 9 within the LED housing voids 19 of the linear optics 3 and showing the cross-sectional profile of the linear optics 3.

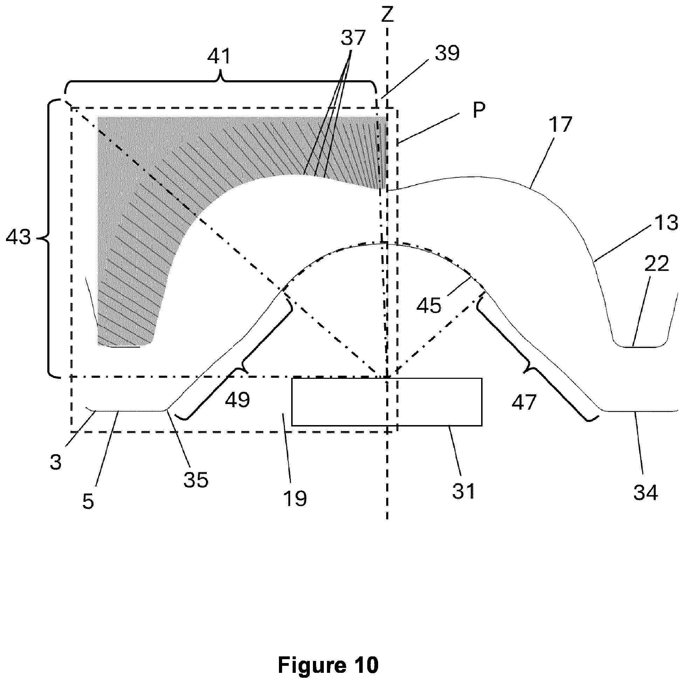

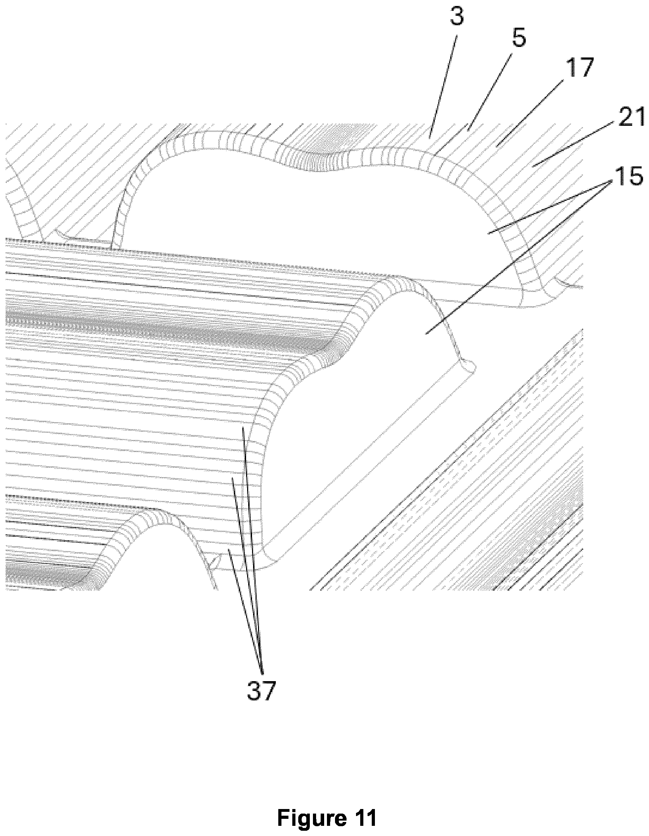

The cross-sectional profile of the linear optics 3 is shown in a close-up view of one linear optic 3 in Figure 10. The profile of the linear optics 3 is generally hemispherical and is symmetrical about a plane Z that is perpendicular to a flat bottom surface 34 of the linear optic array 5. The wall 13 defining the LED housing void 19, varies in width and is shaped to redirect the light emitted from the LEDs in order to provide the desired light distribution. An inside surface 35 of the wall 13 is smooth and the upper surface 17 of the wall 13 is faceted. The individual facets 37 are shown in Figure 11. The left-hand side of Figure 10 shows how the linear optic 3 re-directs the light being emitted by a LED 9 located within the LED housing void 19. Each side of the linear optic 3 can be divided into a first section 39 which does not change the angle of the light passing through it relative to the plane Z, a second section 41 which increases the angle of light passing through it, thus directing that light away from the plane Z, and a third section 43 which decrease the angle of light passing through it, thus directing that light towards the plane Z. In the first section 39 and the second section 41, the light is redirected by the facets 37. In part of the third section 43 the light is redirected by the facets 37 and in another part of the third section 43 the light is redirected by the shape of the inside surface 35 of the linear optic.

The purpose of the second section 41 is to widen the angle of the light emitted by the LEDs 9 from their relatively narrow natural Lambertian distribution. The third section 43 narrows the angle of light emitted by the LEDs 9 in order to reduce the amount of light that is directed from one linear optic 3 into an adjacent linear optic 3, because avoiding directing light into an adjacent linear optic will increase the light transmission efficiency of the light module 1 and reduce the amount of light redirected outside of the desired beam angle.

The cross-sectional profile of the light shaping portion 18 of the linear optics 3 comprises a circularly arced region 45, with the centre point of its arc on the plane Z and coincident with the centre of the light emitting surface of a LED 9 located on the longitudinal axis of the linear optic 3. This makes the angle of the arc normal to the Lambertian light distribution of the LED 9, with the result being that any effect on the light distribution by the arced region 45 is minimised. The arced region 45 has attached to its left-hand end a generally linear, left-hand region 47, and attached to its right-hand end a generally linear, right-hand region 49. The arced region 45, the left-hand region 47 and the right-hand region 49 define the shape of the inside surface 35 of the linear optics 3. The arced region 45 is aligned with the second section 41 of the cross-sectional profile of the linear optic 3 and, because the arced region 45 does not change the angle of the light emitted from the LEDs 9, it is the external surface of the second section 41, i.e. the upper surface 17 of the linear optic 3, which is responsible for shaping the light emitted by the LEDs 9. The external surface creates a larger refraction angle as the light exits the linear optic 3 into the air. The left-hand region 47 and the right-hand region 49 do change the angle of the light emitted from the LEDs 9 and thus in this part of the cross-sectional profile of the linear optics 3 it is both the internal surface 35 and the upper surface 17 that are responsible for shaping the light emitted by the LEDs 9.

The cross-sectional profile of the linear optics 3 also comprises a thinned section 51 that extends away from the plane Z. The thinned section 51 creates a recessed region 53 in the upper surface 17. This thinned section 51 of the wall 13 produces a relatively large change in the angle of the light emitted from the LEDs 9 and it is important to have a relatively large change in angle in this region of the cross-sectional profile of the linear optic 3, i.e. near to the 0° centreline, because this is where the intensity of the light from the LEDs is greatest and thus where a large benefit can be obtained by spreading the light to create a wider distribution.

Although there is a narrowing of the angles of the light in the third section 43, there is a greater amount of widening of light angles taking place in the second section and this, combined with the higher intensity of light in the second section 41 (due to its closer proximity to the 0° centreline) means that there is a resultant widening by the linear optics 3 of the light distribution from the LEDs 9. Light at an angle of between +70 degrees and +90 degrees and light at an angle of between -70 degrees and -90 degrees is not desirable and so narrowing the beam angle focuses light at the desirable angle for a batwing distribution.

The table below shows the aiming sections, starting at the centre of Figure 10, at zero degrees from the emitter, and moving to the left.

| **Aiming section** | **% Refractor** | **Aiming Angle** |
|---|---|---|
| 1 | 0.80% | 0.00° |
| 2 | 0.80% | 2.50° |
| 3 | 0.90% | 5.00° |
| 4 | 0.90% | 7.50° |
| 5 | 1.00% | 10.00° |
| 6 | 1.10% | 12.50° |
| 7 | 1.20% | 15.00° |
| 8 | 1.40% | 17.50° |
| 9 | 1.50% | 20.00° |
| 10 | 1.80% | 22.50° |
| 11 | 2.10% | 25.00° |
| 12 | 2.40% | 27.50° |
| 13 | 2.80% | 30.00° |
| 14 | 3.20% | 32.50° |
| 15 | 3.80% | 35.00° |
| 16 | 4.40% | 37.50° |
| 17 | 5.20% | 40.00° |
| 18 | 6.00% | 42.50° |
| 19 | 6.90% | 45.00° |
| 20 | 7.70% | 47.50° |
| 21 | 8.50% | 50.00° |
| 22 | 8.90% | 52.50° |
| 23 | 8.60% | 55.00° |
| 24 | 7.40% | 57.50° |
| 25 | 5.60% | 60.00° |
| 26 | 3.50% | 62.50° |
| 27 | 1.70% | 65.00° |

The linear optics 3 redirect light through refraction by 2.5 degrees to 65 degrees.

The dimensions of the cross-sectional profile of a linear optic 3 are shown in Figure 10. It has an external width W of 8mm and a maximum height H of 3.66mm. The maximum width A of the LED housing void 19 is 8.31mm. The internal housing void 19 has a central section formed from part of an arc of a circle with a radius R of 2.1mm. There is a distance D of 2.1mm from the top of a white LED 31 to the top of the internal housing void 19 and the thickness C of the wall 13 of the linear optic at its centreline is 0.85mm.

The length L of the linear optics 3 is 39mm and the overall size of the sixteen linear optic blocks 21 of the linear optic array 5, i.e. the part of the linear optic array 5 within the frame 11 is 164mm by 164mm.

The linear optics 3 shape the distribution of the light emitted by the LEDs 9 through each light shaping portion 18 of a wall 13. The end closures 15 are not intended to contribute to shaping the light distribution but are configured so that their interference with the light distribution and any reduction in the transmission of light is minimised. The end closures 15 are provided in this specific embodiment to provide a waterproof configuration, but they could be omitted from a variant of the linear optic array 5, such that a LED housing void 19 would be open at each end.

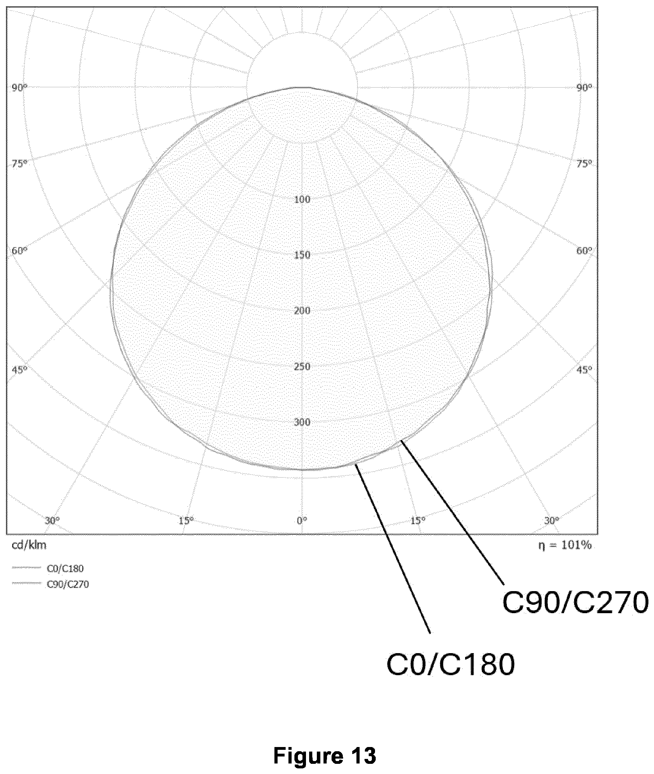

The light emitted by the LEDs 9 has a Lambertian distribution, as shown in the plot of Figure 13. The plot shows how the intensity of light is greatest at the centreline, the vertical 0° line, and how the intensity of light reduces as the angle from the centreline increases, as shown by the radial lines. As explained in the introduction, a LED array providing a Lambertian distribution of light is not desirable for applications such as horticulture. Consequently, the linear optics 3 are used to transform the Lambertian distribution of light from the LEDs 9 into a batwing distribution of light from the linear optics 3.

The desired distribution of the light emitted by the LEDs 9 located within the LED housing void 19 is achieved as a result of the cross-sectional profile of the light shaping portion 18 of each linear optic 3. The light shaping portion 18 spreads the light being emitted from the LEDs 9 within a plane P that is transverse to the longitudinal axis X-X, Y-Y of the linear optics 3, as shown in Figure 10.

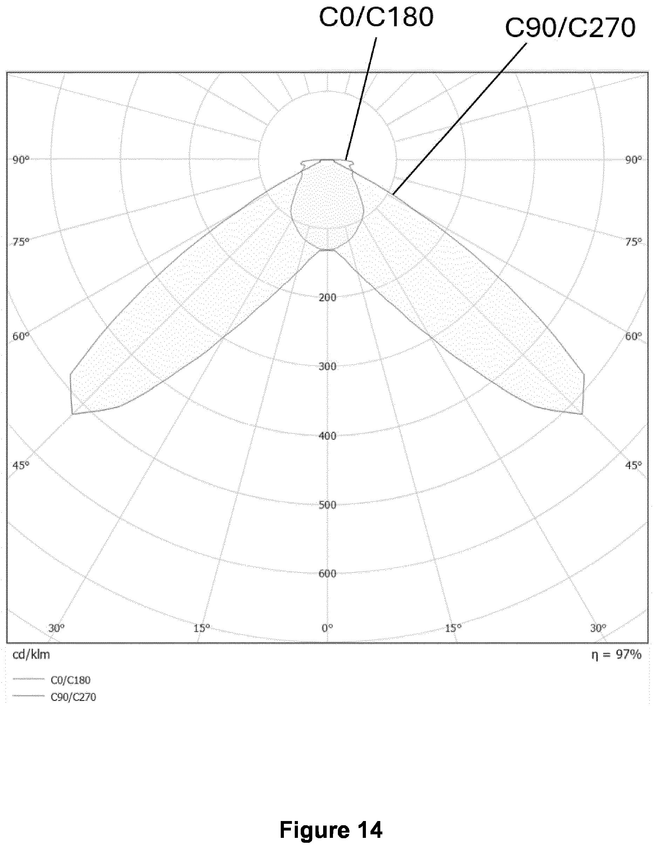

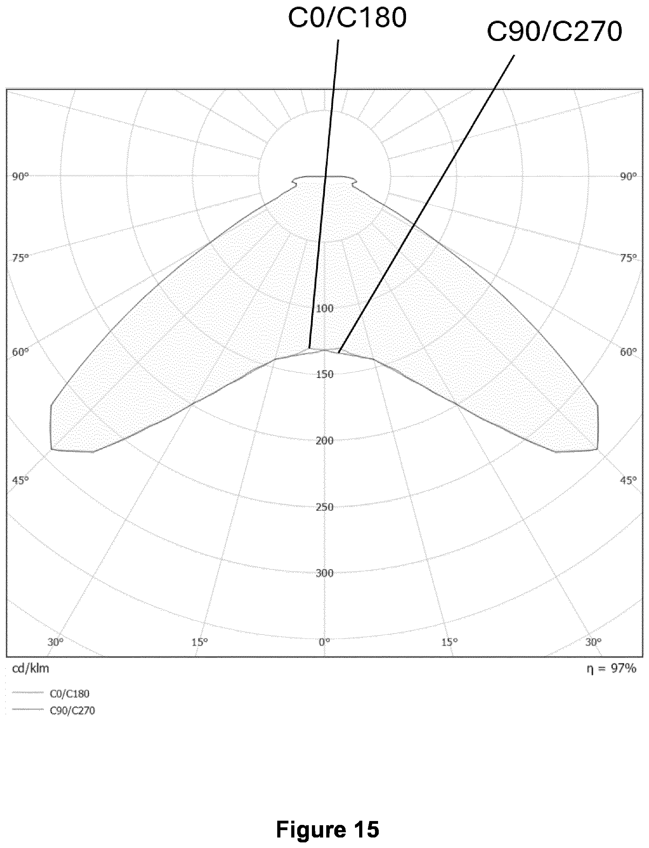

The shaping portion 18 shapes the light emitted by the LEDs 9 that travels in a direction parallel to the plane P (plane P being perpendicular to plane Z) into a batwing distribution. The light emitted by the LEDs 9 that travels in a direction that is perpendicular to the plane P, i.e. parallel to plane Z is not shaped by the shaping portion 18 and consequently retains a Lambertian distribution. This needs to be compensated for and this compensation is provided by the perpendicular orientation of adjacent optic blocks 21, so that there is a batwing distribution provided both in the parallel and perpendicular directions. Figure 14 shows a batwing distribution (C90/C270) such as would be present in a direction parallel to plane P and a Lambertian distribution (C0/C180), such as would be present in a direction parallel to plane Z, from a single linear optic 3. Figure 15 shows a batwing light distribution produced from a first linear optic 3a and a second linear optic 3b aligned perpendicularly to the first linear optic 3a.

The light module 1 of the present invention is thus able to shape the light emitted from all of the LEDs 9 in the LED array 10, by blending the light emitted from the first linear optic block 21a with the second linear optic block 21b, so that the light emitted from the light module 1 as a whole has a batwing distribution in both the parallel and perpendicular directions.

Figure 14 shows the intensity distribution from a single 3030 white mid power LED 9 with an LES of 3mm² placed under a linear optic 3.

Figure 15 shows the light intensity distribution from a single 3030 white mid power LED 9 with an LES of 3mm² placed under a first linear optic 3a and a single 3030 white mid power LED 9 with an LES of 3mm² placed under a second linear optic 3b, where the first linear optic 3a and the second linear optic 3b are orientated so that their respective longitudinal axes X-X, Y-Y are perpendicular to each other.

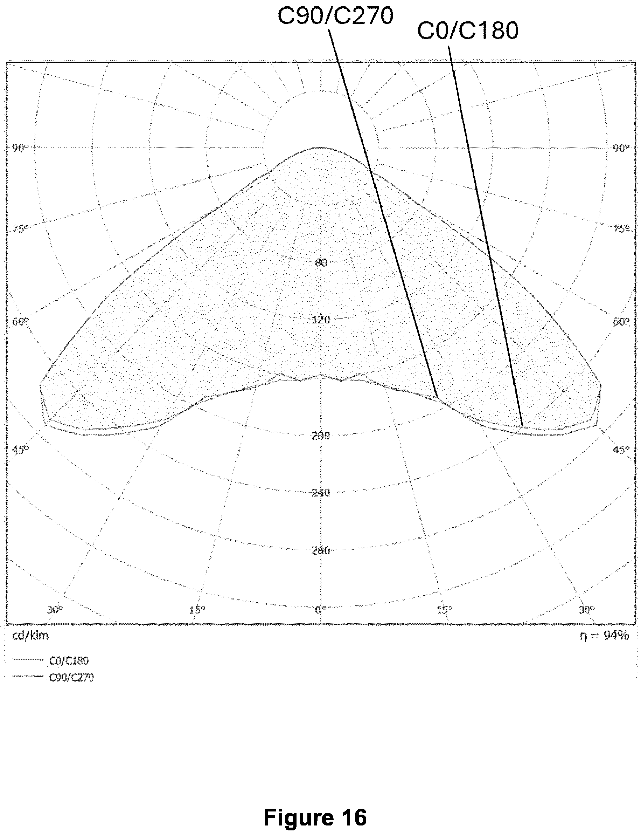

Figure 16 shows the light distribution from a light module 1, for example as shown in Figure 2, having eight hundred 3030 white mid power LEDs with an LES of 3mm² and eighty 3535 660nm LEDs with a LES of 2mm² and a reflective coating laid over the PCB.

The percentage of the linear optics 3 that is dedicated to each aiming angle is selected carefully in order to achieve the correct intensity of distribution of light. When one linear optic 3 is partnered with another rotated linear optic 3 it creates a desirable batwing distribution across all C-planes and not just in the C-plane C90/C270 of Figure 14. This desirable batwing distribution across all C-planes is advantageous for producing a higher irradiance uniformity with a high min/max value. For example, a grid arrangement of grow light fixtures could achieve >0.90 min/max. Providing a higher irradiance uniformity avoids intensity hotspots that can be problematic for a plant canopy grown under a grid, or row, of grow lights. The percentage of the refractor accelerates in a curve from zero degrees to forty-five degrees, peaks at fifty-five degrees and then decelerates from the peak to sixty-five degrees.

The light module 1 of the present invention achieves spectral uniformity because its LEDs 9 can be offset from a longitudinal axis of a linear optic 3, as shown in Figure 6. Different LEDs 9 typically have different light emitting surface area sizes (LES) and they also output light of different wavelengths. The linear optics 3 facilitate the placement of differently LES sized LEDs 9 of different wavelengths within the same linear optic 3 so that the same spectral distribution can be achieved. Offsetting the placement of smaller LES sized LEDs 9 across the perpendicular axis of each optic block 21 creates the same spectral uniformity as can be achieved with a LED 9 of a larger LES size, or a LED 9 outputting light at a different wavelength.

In the embodiment shown in Figure 6, the LES of the white LED 31 is 5mm² and the LES of the red LED 33 is 2mm². To achieve the same spectral uniformity the white LEDs 31 are placed centrally under all five of the linear optics 3. The red LEDs 31 in the three central linear optics 3 are also placed centrally to the linear optics 3, but the two red LEDs 31 in the left-hand and in the right-hand linear optics 3 and in the top and bottom linear optics 3 are offset from the longitudinal axis. The linear optic 3 only controls the light perpendicular to the longitudinal axis and so it's only the offset of the LEDs 9 from the longitudinal axis positioning that needs to be considered because the perpendicularly aligned linear optics 3 will deal with the light distribution along the longitudinal axis.

Variants of the specific embodiment described above are envisaged. In some variants, all of the linear optics 3 might be a larger, scaled, version of the linear optic 3. One envisaged larger version has a radius R of 2.96mm, an external height H of 4.71mm, a wall thickness C of 1.21mm and a distance D of 2.96 mm from the top of a white LED 31 to the top of the internal housing void 19. A larger linear optic 3 is needed if the size of the LES of the LEDs 9 is increased such that a smaller linear optic 3 is not able to provide the desired distribution of light.

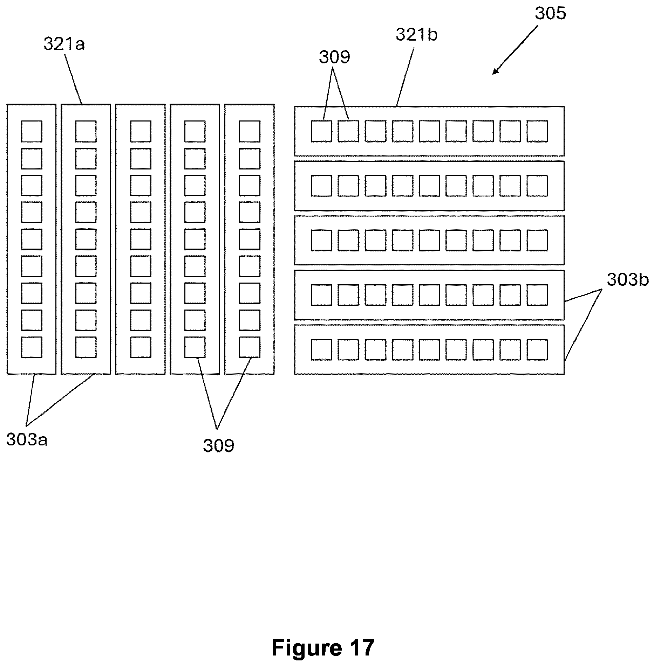

Figures 17, 18, 19, 20 and 21 illustrate schematically five examples of variants of linear optic arrays 305, 405, 505, 605, 705 and LED arrays 310, 410, 510, 610, 710 according to the present invention. The linear optics 303, 403, 503, 603, 703 in each variant have the features of the linear optics 3 of the light module 1 of Figure 1, for example in relation to their cross-sectional profile.

Figure 17 illustrates two identically sized optic blocks 321 that can form the linear optic array 305 of a light module 1, or part of the linear optic array 305 of a light module 1. Each optic block 321 has five linear optics 303 arranged in parallel to each other, with the linear optics 303a in a first optic block 321a being perpendicular to the linear optics 303b in a second optic block 321b. There are nine LEDs 309 located within each linear optic 303 in a single LED line 327 aligned centrally on a longitudinal axis X-X, Y-Y.

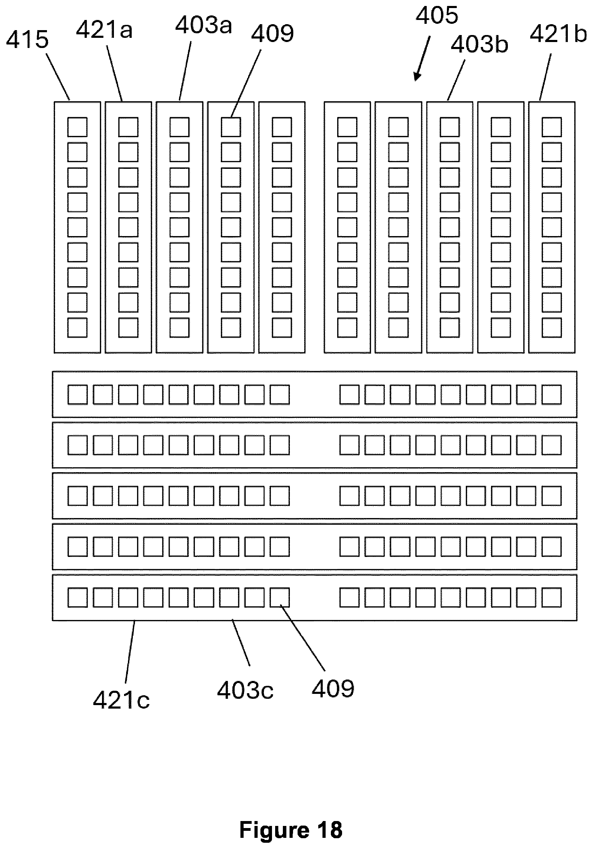

Figure 18 illustrates three optic blocks 421 that can form the linear optic array 405 of a light module 1, or part of the linear optic array 405 of a light module 1. A first optic block 421a and a second optic block 421b are located adjacent to each other and are aligned so that the end closures 415 of their linear optics 403 are aligned. The first and second optic blocks 421a, 421b each have five linear optics 403 arranged in parallel to each other and running in a top to bottom direction, with the linear optics 403a in the first optic block 421a being parallel to the linear optics 403b in the second optic block 421b. There are nine LEDs 409 located within each of the linear optics 403 in the first and second optic blocks 421a,421b in a single LED line 427 aligned centrally on a longitudinal axis Y-Y. The third optic block 421c is twice the width of each of the first and second optic blocks 421a, 421b and comprises five linear optics 403c which are approximately twice the length of the linear optics 403a, 403b. The linear optics 403 run in a left to right direction, they are parallel to each other and perpendicular to linear optics 403a, 403b. There are eighteen LEDs 409 located within each linear optic 403c in a single LED line 427 aligned centrally on a longitudinal axis X-X.

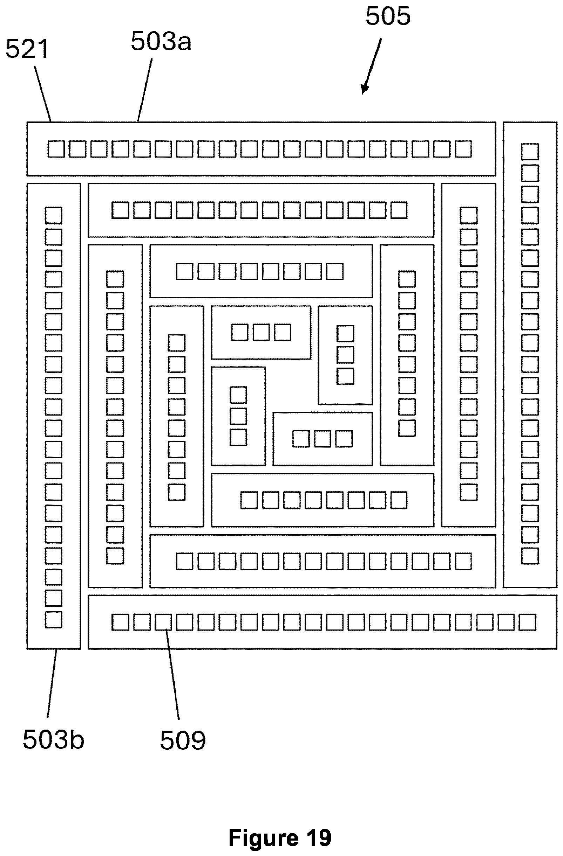

Figure 19 illustrates a linear optic block 521 that can form the linear optic array 505 of a light module 1, or part of the linear optic array 505 of a light module 1. The linear optic block 521 has eight first linear optics 503a that run in a left to right direction and eight second linear optics 503b that run in a top to bottom direction, i.e. perpendicular to linear optics 503a. There are various different lengths of linear optics 503a and various different lengths of linear optics 503b. The lengths of the optics 503a, 503b are selected to fit within the square shape of the linear optic block 521. The optics 503a, 503b have lengths that cover twenty LEDs 509, fourteen LEDs 509, eight LEDs 9 and three LEDs 509.

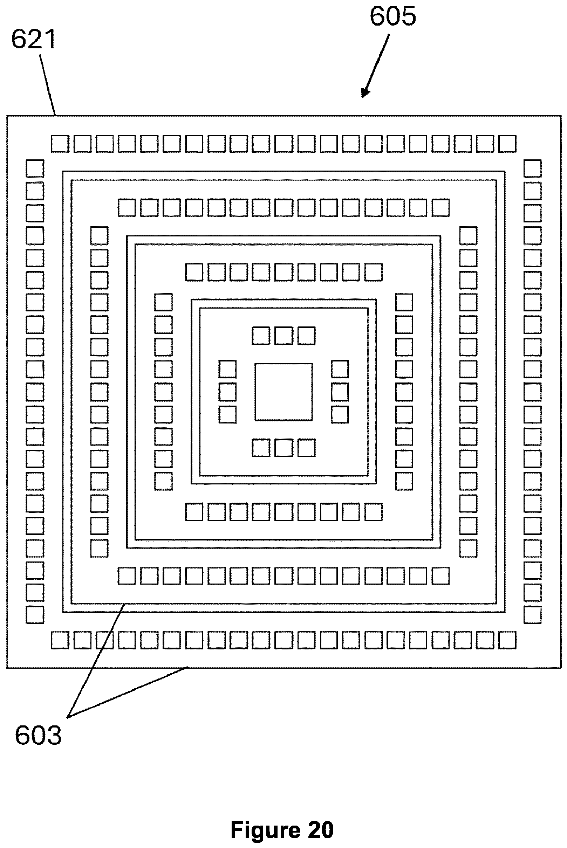

Figure 20 illustrates a linear optic block 621 that can form the linear optic array 605 of a light module 1, or part of the linear optic array 605 of a light module 1. The linear optic block 621 has four linear optics 603, each of which has an annular square shape, i.e. they can be considered to be made up from two optics 603 running in a left to right direction and two optics 603 running in a top to bottom direction. The four linear optics 603 are nested, so that they reduce in size towards the centre of the linear optic block 621. The linear optics 603 cover eighty-four LEDS 609 in four equal length LED lines 627, eighty-four LEDS 609 in four equal length LED lines 627, sixty LEDS 609 in four equal length LED lines 627, thirty-six LEDS 609 in four equal length LED lines 627 and twelve LEDS 609 in four equal length LED lines 627, those LEDs 609 being part of a LED array 610.

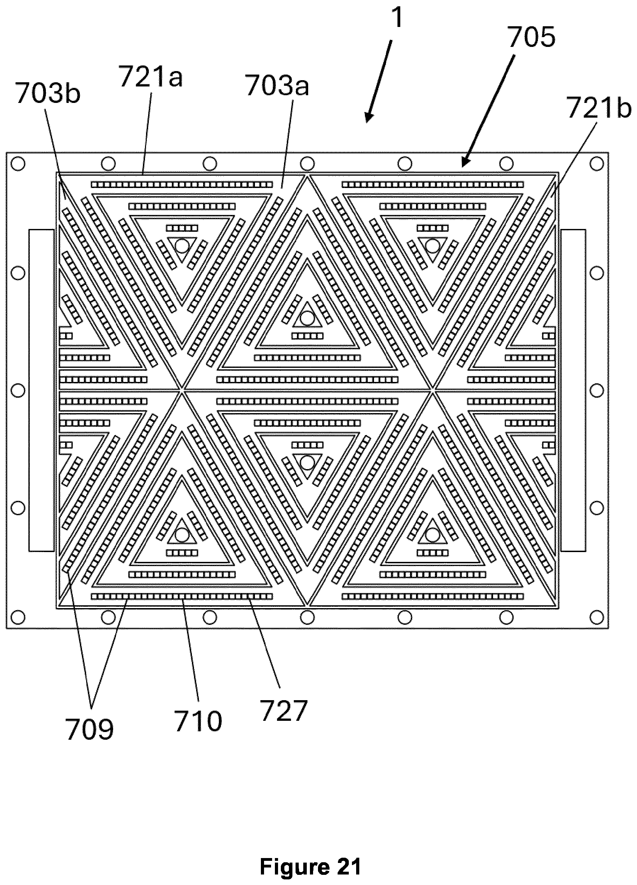

Figure 21 illustrates a light module 1 having a linear optic array 705 comprising linear optics 703 arranged into triangular linear optic blocks 721. The linear optic blocks 721 are of a first type 721a and a second type 721b. The first type of linear optic block 721a is in the form of an equilateral triangle. The second type of linear optic block 721b is in the form of a right-angled triangle, that is the shape of a first linear optic block 721a cut in half. There are six of the first type of linear optic block 721a arranged in two rows of three blocks, with one of the three linear optic blocks 721a in each row rotated relative to the other so that they fit together closely and the two rows are mirrored. There is a linear optic block 721b located at the end of each row and rotated so that it fits closely into the array. The six linear optic blocks 721a and the four linear optic blocks 721b thus form a rectangular linear optic array 705. The linear optic blocks 721a comprise three first linear optics 703a which are nested and they reduce in size towards the centre of the linear optic block 721a. The outermost linear optic 703a covers eighty-seven LEDS 709 in three equal length LED lines 727 of twenty-nine LEDS 709, the middle linear optic 703a covers fifty-one LEDS 709 in three equal length LED lines 727 of seventeen LEDS 709 and the innermost linear optic 703a covers fifteen LEDS 709 in three equal length LED lines 727 of five LEDs 709, those LEDs 709 being part of a LED array 710. The three linear optics 703a in each of the nested triangular arrangements are joined up at their corners. The linear optic blocks 721b comprise two first linear optics 703b which are nested and they reduce in size. The outermost linear optic 703b in a linear optic block 721b covers fourteen LEDS 709 in a LED line 727 and twenty-nine LEDs in a LED line 727, the middle linear optic 703b covers seventeen LEDs 709 in a LED line 727 and eight LEDs 709 in a LED line 727, the innermost linear optic 703b covers five LEDs 709 in a LED line 727 and two LEDs 709 in a LED line 727, those LEDs 709 being part of a LED array 710. The two linear optics 703b in each of the nested triangular arrangements are joined up at their corners.

All of the LED arrays 10, 310, 410, 510, 610, 710 according to the various embodiments of the present invention comprise LED lines 27 of LEDs 9, 309, 409, 509, 609, 709 which run in directions such that there are as many LEDs 9, 309, 409, 509, 609, 709 running in any one direction as there are LEDs 9, 309, 409, 509, 609, 709 running in any other direction, and/or the overall output of light from the associated linear optics 3, 303, 403, 503, 603 in any one direction is the same as the overall output of light from the associated linear optics 3, 303, 403, 503, 603 in any other direction. For example, in the parallel and perpendicular arrangements of LED arrays 10, 310, 410, 510, 610 there are an equal number of LEDs 9, 309, 409, 509, 609 running in a top to bottom direction and in a left to right direction and they produce the same output of light from the associated linear optics 3, 303, 403, 503, 603 in each direction. This output of light might be achieved by using the same number of LEDs 9, 309, 409, 509, 609 in each direction, or by using different numbers of LEDs 9, 309, 409, 509, 609 in each direction but which provide the same overall output of light. In the LED array 710 of Figure 21, there are as many LEDs 709 in a horizontal direction as there are LEDs 709 in a direction of thirty degrees to the vertical in a clockwise direction to the vertical, or in a direction of thirty degrees to the vertical in an anticlockwise direction to the vertical, such that the overall output of light from the associated linear optics 703 is the same in each of the three directions.

This means that any light module 1 comprising such a LED array 10, 310, 410, 510, 610, 710 produces light with a symmetrical distribution. If an asymmetrical distribution of light is required from the light module 1, then the number of LEDs 9, 309, 409, 509, 609, 709 and/or the overall output of light from the associated linear optics 3, 303, 403, 503, 603, 703, running in one direction can be different from the number of LEDs 9, 309, 409, 509, 609, 709 and/or the overall output of light from the associated linear optics 3, 303, 403, 503, 603, 703 running in a different direction.

## Claims

1. A light module (1) for use in a LED grow light (201) comprising a linear optic array (5) with a plurality of linear optics (3), the plurality of linear optics (3) comprising at least one first linear optic (3a) and at least one second linear optic (3b), each linear optic (3) having a wall (13) which defines at least in part a LED housing void (19), wherein a plurality of LEDs (9) are located within a LED housing void (19) of a linear optic (3), the wall (13) having a light shaping portion (18) that has a cross-sectional profile and that is located adjacent to the plurality of LEDs (9), and wherein the at least one first linear optic (3a) has a first longitudinal axis (X-X) and the at least one second linear optic (3b) has a second longitudinal axis (Y-Y), wherein the first longitudinal axis (X-X) and the second longitudinal axis (Y-Y) are offset from each other by an angular offset of α degrees .

2. A light module (1) as claimed in claim 1, wherein the linear optic array (5) comprises a first linear optic block (21a) comprising a plurality of linear optics (3) including the at least one first linear optic (3a) and a second linear optic block (21b) comprising a plurality of linear optics (3) including the at least one second linear optic (3b).

3. A light module (1) as claimed in claim 2, wherein all of the linear optics (3a) in the first linear optic block (21a) are aligned parallel to each other and spaced apart from each other and wherein all of the linear optics (3b) in the second linear optic block (21b) are aligned parallel to each other and spaced apart from each other, and wherein the longitudinal axis (X-X) of each of the linear optics (3a) in the first linear optic block (21a) and the longitudinal axis (Y-Y) of each of the linear optics (3b) in the second linear optic block (3b) are angularly offset from each other by the angular offset of α degrees, so that they are perpendicular.

4. A light module (1) as claimed in claim 2, wherein each of the linear optics (3) in the first linear optic block (21a) is parallel to at least one of the linear optics (3) in the second linear optic block 21(b).

5. A light module (1) as claimed in any of claims 2, 3 and 4, wherein the first linear optic block (21a) is located adjacent to the second linear optic block (21b).

6. A light module (1) as claimed in any of claims 2 to 5, comprising a plurality of first linear optic blocks (21a) and a plurality of second linear optic blocks (21b) which together form a generally rectangular linear optic array (5).

7. A light module (1) as claimed in any of the preceding claims, wherein the cross-sectional profile of the light shaping portion (18) is longitudinally aligned with a longitudinal axis (X-X, Y-Y) of the linear optic (3), wherein the cross-sectional profile is constant along substantially all of its length.

8. A light module (1) as claimed in any of the preceding claims, wherein the cross-sectional profile of the light shaping portion (18) is constant along substantially all of its length and is symmetrical about a plane (Z) that is aligned with a longitudinal axis (X-X, Y-Y) of the linear optic (3).

9. A light module (1) as claimed in any of the preceding claims, comprising a plurality of first linear optic blocks (21a) and a plurality of second linear optic blocks (21b), each of the first and second linear optic blocks (21a,21b) comprising five linear optics (3), wherein the ends of the linear optics (3) within each linear optic block (21a, 21b) are aligned with each other.

10. A light module (1) as claimed in any of the preceding claims, wherein the linear optic array (5) comprises sixteen linear optic blocks (21a,21b) arranged in a four-by-four matrix of eight first optic blocks (21a) and eight second optic blocks (21b), with the linear optics (3) in adjacent optic blocks (21a, 21b) angularly offset from each other by the angular offset of α degrees, such that they are perpendicular.

11. A light module (1) as claimed in any of the preceding claims, wherein the form of the cross-sectional profile of the light shaping portion (18) is identical for all of the linear optics (3) and wherein the size of the cross-sectional profile of the light shaping portion (18) of one linear optic (3a,3b) can be different to the size of the cross-sectional profile of the light shaping portion (18) of the at least one other of the linear optics (3a,3b).

12. A light module (1) as claimed in any of claims 1 to 10, wherein all of the linear optics (3) have a light shaping portion (18) that is identical in form and size.

13. A light module (1) as claimed in any of the preceding claims, wherein the plurality of LEDs (9) are located on a LED circuit board (7) in a plurality of LED lines (27), each LED line (27) comprising a plurality of LEDs (9), wherein the LED circuit board (7) is attached to the linear optic array (5) and wherein a linear optic array (3) is located over each LED line (27), such that the plurality of LEDs (9) in each LED line (27) are located within the LED housing void (19) of a linear optic (3).

14. A light module (1) as claimed in claim 12, wherein at least one of the LEDs (9) in a LED line (27) is centrally placed on a longitudinal axis (X-X, Y-Y) of the linear optic (3) within which it is located.

15. A light module (1) as claimed in claim 12 and claim 13, wherein at least one of the LEDs (9) in a LED line (27) is centrally placed on a longitudinal axis (X-X, Y-Y) of a linear optic (3) and at least one of the LEDs (9) in a LED line is offset from the longitudinal axis (X-X, Y-Y) of the linear optic (3).

16. A light module (1) as claimed in any of the preceding claims, wherein a first type of LED (31) and a second type of LED (33) are located within the LED housing void (19) of a linear optic (3).

17. A light module (1) as claimed in claim 15, wherein the first type of LED (31) located within the LED housing void (19) of a linear optic (3) has a larger light emitting surface area than the second type of LED (33) located within the LED housing void (19).

18. A light module (1) as claimed in any of the preceding claims wherein the light shaping portion (18) of the linear optics (3) has a first section (39) which does not change the angle of light emitted by the LEDs (9), a second section (41) in which the angle of light is changed by the external surface (17) only of the linear optic (3) and a third section (43) in which the angle of light is changed by the internal surface (35) and the external surface (37) of the linear optic (3).

19. A light module (1) as claimed in any of the preceding claims, wherein the light shaping portion (18) of the linear optics (3) has a first section (39), a second section (41) and a third section (43), wherein the first section (39) does not change the angle of the light passing through it relative to a plane (Z) that is perpendicular to a flat bottom surface (34) of the linear optic array (5) and located on the longitudinal axis (X-X, Y-Y) of the linear optics (3), the second section (41) increases the angle of light passing through it, thus directing that light away from the plane (Z), and the third section (43) decreases the angle of light passing through it, thus directing that light towards the plane (Z).

20. A LED grow light (201) comprising a light module (1) according to any of the preceding claims.
